# EUROPEAN PATENT APPLICATION

(11) **EP 0 938 233 A2**
(43) Date of publication of application: **25.08.1999**
(21) Application number: 99200313.7
(22) Date of filing: 03.02.1999
(51) Int. Cl.: H04N 7/01

(54) **A method and apparatus for transmitting digital picture signals**

(30) Priority: 18.02.1998 GB 9803298
(71) Applicant: NDS LIMITED, West Drayton, Middlesex UB7 ODQ (GB)
(72) Inventor: Bock, Alois Martin, Eastleigh, Hampshire SO53 4RH (GB)
(74) Representative: Stoakes, Rosemarie Clare

(57) **Abstract**

The present invention relates to transmitting a digital picture signal generated at a first sampling rate to be received by a receiver at a higher sampling rate and is of advantage in converting a standard television signal to a high definition (HDTV) signal.

The invention provides that the picture signal is generated, compressed and transmitted. The signal is then decompressed for application to the receiver. Additional picture information is generated and added to the video signal to change the signal from the first to the second sampling rate. The addition of the additional picture information takes place at a point in the sequence of transmission following the compression of the digital signal at the first sampling rate and before the signal is applied to the receiver. By this means, the cost and complexity of a compression encoder to compress the picture signal at the higher sampling rate is avoided.

## Description

The present invention relates to a method and apparatus for transmitting a digital picture signal generated at a first sampling rate to be received by a receiver operating at a higher sampling rate. The digital picture signals may represent successive frame or picture information. The invention is of advantage in converting a standard television signal to a high definition (HDTV) signal.

The generation of digitally compressed HDTV signals requires costly encoding equipment due to the large number of samples and the high sampling frequency of the HDTV signals. Furthermore, the generation of HDTV signals requires considerable investment in studio and production equipment. It has been suggested that in order to start HDTV transmissions, most of the existing production and studio equipment for producing normal standard television signals could remain. It is suggested that this could be augmented by an up-conversion to HDTV signals prior to compression encoding. In this way, HDTV transmissions can be started so as to service a growing population of receivers capable of receiving and decoding HDTV signals. This has the advantage that the production is still mostly carried out at the normal resolution using the existing equipment followed by conversion to HDTV encoding at a later stage. The cost of re-equipping transmission and broadcast facilities can thus be avoided.

The most common format for the standard television signal is an interlaced or progressive video signal sampled at 27 MHz. A 525 line signal, consists of 480 lines by 720 samples with a frame rate of 29.97 Hz and a 625 line signal consists of 576 lines by 720 samples at a frame rate of 25 Hz. Up conversion consists of an increase of the number of lines per frame, the number of frames per second, the number of samples per line or a combination of these. An HDTV compression encoder might have to process a video signal which consists of 720 lines by 1280 samples with a frame rate of 59.94 Hz, which represents a sample rate of about 5.3 times the original sampling rate using the standard production equipment.

To convert a standard television signal to an HDTV signal prior to compression encoding presents the problem of a costly compression encoder to deal with the higher sampling frequency of the HDTV signal rather than the lower sampling frequency of the standard signal.

According to the present invention, there is now provided a method of transmitting a digital video signal generated at a first sampling rate to a receiver operative to receive at a second sampling rate higher than the first, the method comprising a sequence of steps including: generating the digital video signal at the first sampling rate; compressing the digital video signal; transmitting the compressed digital video signal; decompressing the digital video signal; and applying the decompressed video signal to the receiver, characterised in that the method comprises the additional step of providing additional picture information and adding the additional information to the video signal to change the signal to the second sampling rate, the additional picture information being added at a point in the sequence of transmission following the step of compressing the signal at the first sampling frequency and before applying the signal to the receiver.

Further according to the present invention there is provided apparatus for transmitting a digital video signal generated at a first sampling rate to a receiver operative to receive at a second sampling rate higher than the first, the apparatus comprising: a generator to generate a digital video signal at the first sampling rate; a compression encoder to compress the digital video signal; a transmitter to transmit the compressed video signal; and a decoder to decompress the video signal for application to the receiver, the apparatus being characterised in that there is provided a generator of additional picture information and an adding circuit to add the additional picture information to the video signal to change the signal to the second sampling rate, the adding circuit being disposed to add the additional information at a point in the sequence of transmission following the compression of the signal and before the application of the signal to the receiver.

The invention thus has the advantage that the compression may take place using a compression encoder operating at the sample rate of the first line definition format rather than the higher sample rate of the second line definition format.

The invention will now be further described, by way of example, with reference to the accompanying drawings in which:
Figure 1 shows a prior art signal conversion system to convert digital television signals, and
Figures 2, 3, 4 and 5 are block diagrams which show respectively four alternative embodiments of apparatus according to the present invention to convert a standard digital television signal to a high definition television signal.

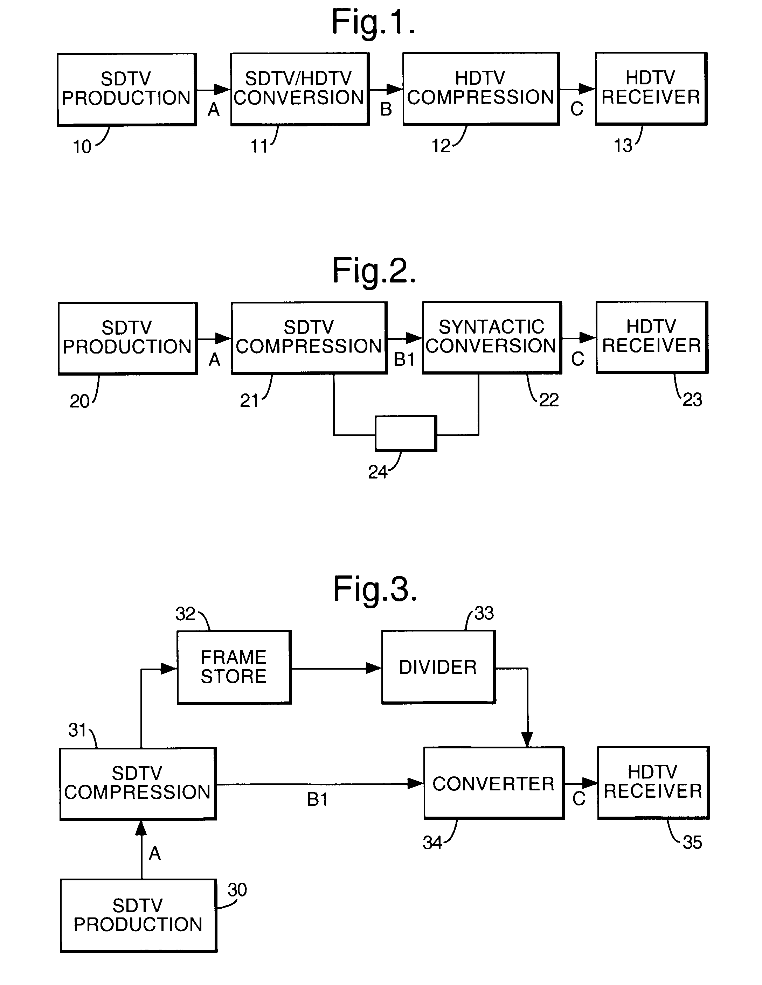

In Figure 1, there is shown standard television production equipment 10 designed to produce an output digital television signal A conforming to a standard format. An example of a standard format is the 525 line signal sampled at 27 MHz consisting of 480 lines by 720 samples with a frame rate of 29.97 Hz. Another standard format is the 625 line signal consisting of 576 lines by 720 samples with a frame rate of 25 Hz. The signal A is applied to a converter 11 which provides, by interpolation from the signal A, an up-conversion from the standard format to the high definition (HDTV) format of 720 lines by 1280 samples with a frame rate of 59.94 Hz. The output from the converter 11 is the HDTV signal B.

The HDTV signal B is applied to a compression encoder 12 to produce the compressed signal C ready for transmission to a receiver 13. As can be seen from the diagram in Figure 1, the compression encoder 12 is required to compress the full HDTV signal B to produce the compressed signal C. This requires the encoder 12 to compress a signal having about 5.3 times the sample rate of the signal A in standard format.

Referring now to Figure 2, there is shown a first embodiment of apparatus according to the present invention. In Figure 2, there is shown television production equipment 20 which is of the same general configuration and operation as the equipment 10 in Figure 1 and produces an output digital television signal A of the same standard format as the equipment 10. The signal A from the production equipment 20 is applied to a compression encoder 21 which employs the MPEG 1 or MPEG 2 compression algorithm widely used in digital video compression. The compression encoder 21 compresses the signal A to produce a compressed signal B1. The compressed signal B1 is then applied to a syntactic up-converter 22 where the signal B1 is converted to form the HDTV signal C for transmission to the receiver 23.

The embodiment of the invention shown in Figure 2 is particularly adapted to the situation where a large percentage of the television content originates from film produced at 24 frames per second and for which a progressive representation of the video signal is most appropriate. If the video signal A at the input of the compression encoder 21 is progressively scanned with a frame rate of 29.97 Hz, then the process of compression encoding can be carried out before the up-conversion to higher frame rates. The process of converting 24 Hz film into a video signal with a frame rate of 29.97 Hz (known in the art as 3:2 pull-down) is usually reversed at the input to the compression encoder so that the encoder produces a compressed video signal at 24 frames per second.

The up conversion carried out in the converter 22 is based on the principle of inserting additional synthesized pictures in between existing ones using syntactic elements of the compression algorithm employed in the compression encoder 21. The syntactic elements are derived from the compression algorithm by means of the synthesizer 24. In the simplest case, there is no content in these added synthesized pictures other than picture and slice headers. This will result in a frame repeat in the receiver 23, which in the case of 24 Hz originated film, might be all that is needed to reduce the large area flicker of the display. The up-conversion process consists of the addition of small syntactic elements into the compressed bitstream and the increase in data rate due to the up-conversion is, therefore relatively small.

If the standard format signal A is produced at a higher frame rate, e.g. 29.97 Hz interlaced, the simple method employed in the system of Figure 2 may result in motion judder which may not be acceptable in all cases. Referring now to Figure 3, there is shown a second embodiment of the present invention in which this problem of motion judder is addressed.

In Figure 3, the production equipment 30 is of the same general configuration and operation as the equipment 20 of Figure 2 except that it produces a digital television signal A at a frame rate of 29.97 Hz. Signal A is applied to a compression encoder 31 which produces a compressed signal B1 and additionally copies the motion vectors from the previously transmitted frame into a frame store 32. The motion vectors are scaled down in a divider 33 by a factor of 2 to allow for the shorter time period. The resultant scaled motion vectors are applied to the up-converter 34 together with the compressed signal B1. The up-converter synthesizes the picture signal C for transmission to the HDTV receiver 35 by the addition of the syntactic elements previously referred to and includes motion compensation using the scaled down motion vectors. Thus, motion compensation is achieved without the need for additional motion estimation.

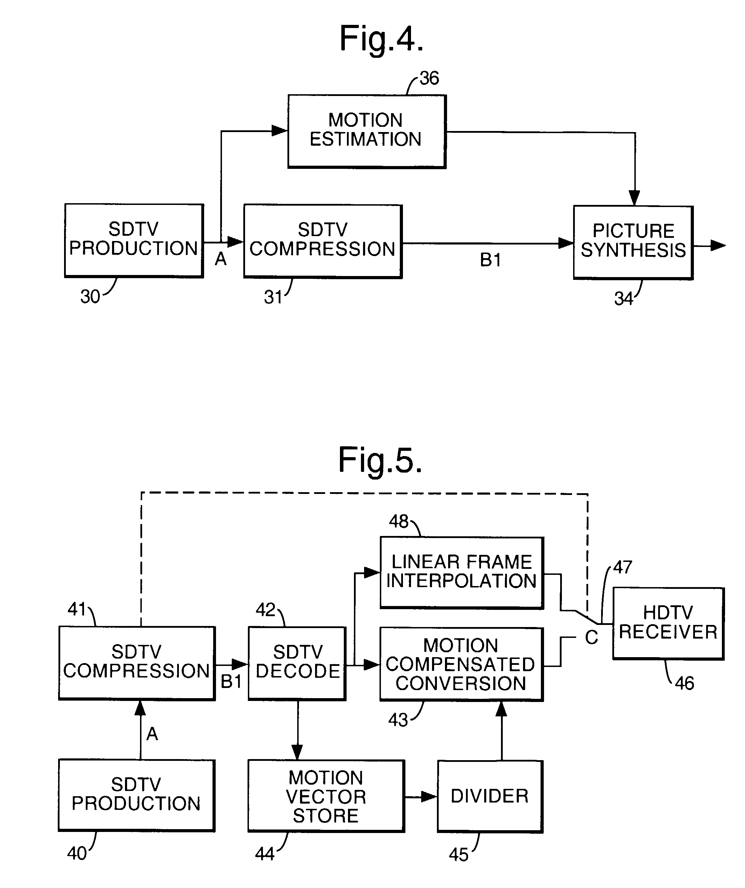

It is possible to adapt the apparatus shown in Figure 3 to provide motion compensated up-conversion as shown in Figure 4. The motion vectors in this case are derived from the digital signal A by motion estimation using the motion estimation circuit 36. The motion vectors are applied to the up-converter 34 from the motion estimation circuit 36 in place of the scaled motion converters from the divider 33.

The apparatus so far described with reference to Figures 2 to 4 works well for most types of picture material. It is only with certain types of motion which are not readily represented in syntactic elements of the compression algorithm (eg rotational motion) that difficulties may be presented. A solution is to delay the process of up - conversion to a HDTV signal into the HDTV receiver. Such a solution is shown in the apparatus of Figure 5.

In Figure 5, standard television production equipment 40 is of the same general configuration and operation as the equipment 20 of Figure 2 or the equipment 30 of Figures 3 and 4. The equipment 40 produces a digital television signal A for application to a digital compression encoder 41, which produces a compressed digital television signal B1. The signal B1 is transmitted together with a motion vector quality signal, which indicates the quality of motion compensation.

The signal B1 from the encoder 41 is decoded by means of a compression decoder 42 and subsequently up-converted into the HDTV format in a converter 43. Motion vectors are passed from the decoder 42 into a motion vector store 44 where they are divided by 2 in a divider 45. The resulting scaled motion vectors are similar to those referred to in connection with the embodiment of the invention shown in Figure 3 and are applied to the converter 43 which produces the motion compensated signal C in HDTV format for application to the receiver 46.

The signal C is applied to the receiver 46 by way of a switch 47 controlled by the motion vector quality signal. Limitations of the compression syntax may cause the motion compensation provided by the converter 43 to suffer. Spatial samples of the video signal decoded by the decoder 42 are provided to a linear frame interpolator 48 which performs linear frame interpolation on the decoded signal for application to the switch 47. The motion vector quality signal is effective to control the switch 47 to connect the receiver 46 to an output terminal of the switch 47 to receive the motion compensated signal from the converter 43 whenever the quality of motion rendition is adequate. Once the quality of motion rendition becomes unacceptably low, the switch 47 is switched to apply the linear interpolated signal from the interpolator 48 to the receiver 46.

## Claims

1. A method of transmitting a digital video signal generated at a first sampling rate to a receiver operative to receive at a second sampling rate higher than the first, the method comprising a sequence of steps including:
generating the digital video signal at the first sampling rate;
compressing the digital video signal;
transmitting the compressed digital video signal;
decompressing the digital video signal; and
applying the decompressed video signal to the receiver, characterised in that the method comprises the additional step of providing additional picture information and adding the additional information to the video signal to change the signal to the second sampling rate, the additional picture information being added at a point in the sequence of transmission following the step of compressing the signal at the first sampling frequency and before applying the signal to the receiver.

2. A method as claimed in claim 1 or 2, wherein the step of compressing the signal is performed using a digital compression algorithm and the step of adding the synthesized picture information comprises inserting additional synthesized pictures derived from elements of the compression algorithm.

3. A method as claimed in claim 1 or 2 that is applied to converting a digital picture signal in the form of a digital television signal.

4. A method as claimed in claim 3, comprising the further steps of copying motion vectors from the television signal, dividing the motion vectors and using the divided motion vectors to effect motion compensation of the converted television signal.

5. A method as claimed in claim 4, comprising the further step of decompressing the compressed television signal before the step of adding synthesized picture information.

6. A method as claimed in claim 5, wherein the step of copying motion vectors from the television signal is performed by copying the motion vectors from the decompressed television signal.

7. A method as claimed in claim 6, including the further steps of deriving a linear frame interpolated signal from the decompressed television signal; deriving a motion vector quality signal indicative of the quality of motion compensation, and applying the motion vector quality signal to a switch to select either the motion compensated converted signal or the linear frame interpolated signal for supply to an output terminal of the switch.

8. Apparatus for transmitting a digital video signal generated at a first sampling rate to a receiver operative to receive at a second sampling rate higher than the first, the apparatus comprising:
a generator to generate a digital video signal at the first sampling rate;
a compression encoder to compress the digital video signal;
a transmitter to transmit the compressed video signal; and
a decoder to decompress the video signal for application to the receiver, the apparatus being characterised in that there is provided a generator of additional picture information and an adding circuit to add the additional picture information to the video signal to change the signal to the second sampling rate, the adding circuit being disposed to add the additional information at a point in the sequence of transmission following the compression of the signal and before the application of the signal to the receiver.

9. Apparatus as claimed in claim 8, wherein the generator of additional picture information is effective to derive the additional picture information from a compression algorithm employed by the compression encoder to compress the video signal.

10. Apparatus as claimed in claim 8 or 9, which is adapted to convert transmitted digital video signals in the form of digital television signals.

11. Apparatus as claimed in claim 10, further comprising means to copy motion vectors from the television signal, a divider to divide the motion vectors and means to apply the divided motion vectors to effect motion compensation of the converted television signal.

12. Apparatus as claimed in claim 11, wherein the means to copy motion vectors is connected to receive motion vectors from the decoder.

13. Apparatus as claimed in claim 12, further comprising a frame interpolator to derive a linear frame interpolated signal from the decoder to derive a motion vector quality signal indicative of the quality of motion compensation and a switch operated by the motion vector quality signal to select either the motion compensated converted signal or the linear frame interpolated signal for supply to an output terminal of the switch.

14. A method of transmitting a digital video signal generated at a first sampling rate to a receiver operative at a second sampling rate higher than the first, the method being substantially as hereinbefore described with reference to Figure 2, 3, 4 or 5 of the accompanying drawings.

15. Apparatus for transmitting a digital video signal generated at a first sampling rate to a receiver operative to receive at a second sampling rate higher than the first, the apparatus being substantially as hereinbefore described with reference to Figure 2, 3, 4 or 5 of the accompanying drawings.
